**Europäisches Patentamt**

**European Patent Office**

**Office européen des brevets**

(19)

(11) Veröffentlichungsnummer: **0 180 750**
**B1**

(12) # EUROPÄISCHE PATENTSCHRIFT

(45) Veröffentlichungstag der Patentschrift:
**04.01.89**

(21) Anmeldenummer: **85112045.1**

(22) Anmeldetag: **24.09.85**

(51) Int. Cl.⁴: **H05G 1/32**, H05G 1/20,
H02M 3/28

(54) **Mittelfrequenz-Röntgengenerator.**

(30) Priorität: **09.10.84 DE 3437029**

(43) Veröffentlichungstag der Anmeldung:
**14.05.86 Patentblatt 86/20**

(45) Bekanntmachung des Hinweises auf die Patenterteilung:
**04.01.89 Patentblatt 89/1**

(84) Benannte Vertragsstaaten:
**DE FR**

(56) Entgegenhaltungen:
**EP-A- 0 108 336**
**DE-A- 2 814 320**
**DE-A- 3 043 632**
**FR-A- 2 431 237**
**FR-A- 2 527 035**

(73) Patentinhaber: **Siemens Aktiengesellschaft Berlin und München, Wittelsbacherplatz 2, D-8000 München 2(DE)**

(72) Erfinder: **Tichy, Peter, Schleifweg 9,**
**D-8525 Uttenreuth(DE)**
Erfinder: **Kühnel, Werner, Schlesische Strasse 7,**
**D-8525 Uttenreuth(DE)**

## Beschreibung

Die Erfindung betrifft einen Mittelfrequenz-Röntgengenerator mit zwei Wechselrichtern, deren Ausgangsspannungen zur Bildung der Röntgenröhrenspannung mit Hilfe zweier Hochspannungstransformatoren überlagert werden, deren Sekundärspannungen die Röntgenröhre über zwei in Reihe geschaltete Hochspannungsgleichrichter speisen.

Ein Röntgengenerator dieser Art ist in der DE-OS 2814320 beschrieben. Bei diesem Röntgengenerator sind zwei Wechselrichter gleicher Leistung vorgesehen, von denen jeder die halbe Röntgenröhrenspannung liefert. Die Welligkeit der Röntgenröhrenspannung wird dadurch verringert, daß den Wechselrichtern um 90° gegeneinander versetzte Steuerimpulse zugeführt werden, so daß die Ausgangsspannungen der Hochspannungsgleichrichter auch um 90° gegeneinander versetzt sind. Dadurch besitzt die Röntgenröhrenspannung, die die Summe der Ausgangsspannungen beider Hochspannungsgleichrichter ist, eine relativ geringe Welligkeit.

Der Erfindung liegt die Aufgabe zugrunde, einen Mittelfrequenz-Röntgengenerator der eingangs genannten Art so auszubilden, daß die Welligkeit der Röntgenröhrenspannung gegenüber dem Stand der Technik noch weiter verringert wird.

Diese Aufgabe ist erfindungsgemäß dadurch gelöst, daß die Wechselrichter unterschiedliche Leistungen aufweisen, derart, daß ein Wechselrichter im wesentlichen die Spitzenspannung der Röntgenröhre liefert und der zweite Wechselrichter die Spannungseinbrüche des ersten Wechselrichters auffüllt und daß der zweite Wechselrichter eine höhere Frequenz als der erste Wechselrichter hat. Bei dem erfindungsgemäßen Röntgengenerator ist die Leistung des zweiten Wechselrichters wesentlich kleiner als diejenige des ersten Wechselrichters. Seine Frequenz ist dagegen erheblich höher, so daß die Welligkeit der Röntgenröhrenspannung, die die Summe der beiden Ausgangsspannungen der Hochspannungsgleichrichter ist, gegenüber dem Stand der Technik noch weiter reduziert ist.

Die Erfindung ist nachfolgend anhand eines in der Zeichnung dargestellten Ausführungsbeispieles näher erläutert. Es zeigen:

Fig. 1 einen Mittelfrequenz-Röntgengenerator nach der Erfindung, und

Fig. 2 Kurven zur Erläuterung der Figur 1.

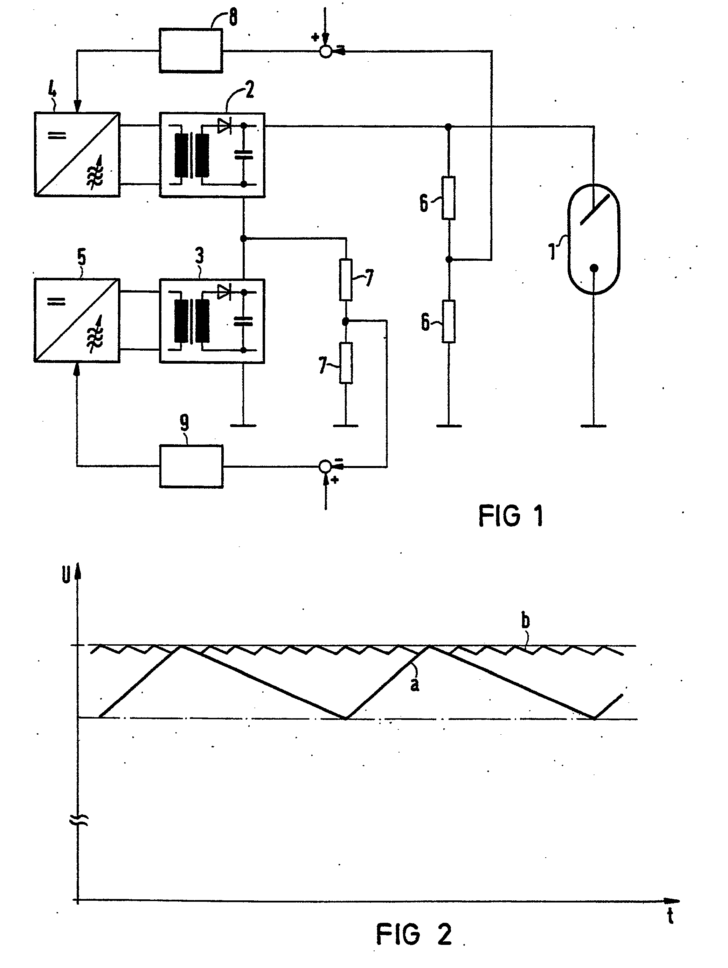

In der Figur 1 ist eine Röntgenröhre 1 dargestellt, die von zwei in Reihe geschalteten Hochspannungsgeneratoren 2, 3 gespeist wird. Die Hochspannungsgeneratoren 2, 3 enthalten zwei Hochspannungstransformaten sowie zwei Hochspannungsgleichrichter, deren Ausgangsspannungen an der Röntgenröhre 1 addiert werden. Die Speisung der Primärwicklungen der Hochspannungstransformatoren der Hochspannungsgeneratoren 2, 3 erfolgt durch zwei Wechselrichter 4, 5.

In der Figur 2 zeigt die Kurve a die Ausgangsspannung des Hochspannungsgenerators 3, die relativ große Spannungseinbrüche aufweist. Diese Spannungseinbrüche werden durch den vom Wechselrichter 4 gespeisten Hochspannungsgenerator 2 aufgefüllt, so daß die Röntgenröhrenspannung entsprechend der Kurve b in Figur 2 verläuft. Aus diesem Verlauf ergibt sich, daß die Frequenz des Wechselrichters 4 erheblich höher als die Frequenz des Wechselrichters 5 ist. Seine Leistung ist dagegen wesentlich kleiner als die Leistung des Wechselrichters 5.

Zur Regelung der Röntgenröhrenspannung sind zwei den Wechselrichtern 2, 3 zugeordnete Regelkreise mit je einem Istwertgeber 6, 7 und einem Spannungsregler 8, 9 zugeordnet.

## Patentansprüche

1. Mittelfrequenz-Röntgengenerator mit zwei Wechselrichtern (4, 5), deren Ausgangsspannungen zur Bildung der Röntgenröhrenspannung mit Hilfe zweier Hochspannungstransformatoren überlagert werden, deren Sekundärspannungen die Röntgenröhre (1) über zwei in Reihe geschaltete Hochspannungsgleichrichter speisen, dadurch gekennzeichnet, daß die Wechselrichter (4, 5) unterschiedliche Leistungen aufweisen, derart, daß der erste Wechselrichter (5) im wesentlichen die Spitzenspannung der Röntgenröhre (1) liefert und der zweite Wechselrichter (4) die Spannungseinbrüche des ersten Wechselrichters (5) auffüllt und daß der zweite Wechselrichter (4) eine höhere Frequenz als der erste Wechselrichter hat.

## Claims

1. Medium-frequency X-ray generator having two inverters (4, 5), the output voltages of which, for the formation of the X-ray tube voltage, are superimposed with the aid of two high-voltage transformers, the secondary voltages of which feed the X-ray tube (1) via two series-connected high voltage rectifiers, characterised in that the inverters (4, 5) have different outputs such that the first inverter (5) essentially supplies the peak voltage to the X-ray tube (1) and the second inverter (4) fills the voltage dips of the first inverter (5) and in that the second inverter (4) has a higher frequency than the first inverter.

## Revendications

1. Générateur radiogène à moyenne fréquence, avec deux onduleurs (4, 5) dont les tensions de sortie sont superposées à l'aide de deux transformateurs haute tension en vue de former la tension du tube radiogène, et dont les tensions secondaires alimentent le tube radiogène (1) par l'intermédiaire de deux redresseurs haute tension montés en séries, caractérisé par le fait que les onduleurs (4, 5) ont des puissances différentes et cela de manière que le premier onduleur (5) fournit essentiellement la tension de crête du tube radiogène, alors que le second onduleur (4) compense les chutes de tension du premier onduleur (5), et que le second onduleur possède une fréquence plus élevée que celle du premier onduleur.

FIG 1

FIG 2

3